# EUROPÄISCHE PATENTANMELDUNG

(11) **EP 2 602 517 A1**
(43) Veröffentlichungstag der Anmeldung: **12.06.2013**
(21) Anmeldenummer: 11192801.6
(22) Anmeldetag: 09.12.2011
(51) Int. Cl.: F16K 11/10, F16K 15/20, F16K 31/122

(54) **Über Druckmittel steuerbares Ventil**

(71) Anmelder: Tsiberidis, Konstantinos, 74076 Heilbronn (DE)
(72) Erfinder: Tsiberidis, Konstantinos, 74076 Heilbronn (DE)
(74) Vertreter: Naefe, Jan Robert

(57) **Zusammenfassung**

Die Erfindung betrifft ein 3/3-wege-Ventil, das mittels Druckmedium steuerbar ist. Es weist drei Anschlusswege auf, von denen ein Anschluss mit dem Druckmedium verbunden ist. Die Druckbeaufschlagung bewirkt in Abhängigkeit des angelegten Drucks einmal einen Durchstrom des Druckmediums durch das Ventil, und zum anderen eine Entlüftung des Ventils entgegen der Durchführrichtung für das Druckmedium. Hierzu weist das Ventil einen Ventilkörper (10) auf, in dem ein Hohlkanal (20) gebildet ist, innerhalb dessen ein verfahrbarer Ventilkolben (22) gehalten ist, und in dem ein Druckmittelkanal (28) geführt ist, der ein Absperrelement (30) aufweist, das beim Erreichen der aus der Druckmittelbeaufschlagung resultierenden Anschlagstellung des Ventilkolbens den Druckmittelkanal (28) öffnet.

## Beschreibung

Die Erfindung betrifft ein 3/3-Wegeventil mit drei Anschlüssen und drei Steuerstellungen. Es ist mit einem Druckmittel, d.h. einem Fluid steuerbar und weist einen doppelsitzigen Ventilkolben auf, der in seiner Offenstellung den Druckmittelanschluss, d.h. einen Einlassport, mit einem Auslassport verbindet und in seiner Sperrstellung den Auslassport mit dem Einlassport sperrt. In einer weiteren, der dritten Steuerstellung des Ventils wird der Auslassport mit einem Entlüftungsweg verbunden.

Druckabhängig schaltende Dreiwegeventile werden vorwiegend für die selbsttätige Regelung von Anlagen für die Erzeugung oder Verteilung (Weiterleitung) unter Druck stehender Gase verwendet, bei denen ein bestimmter Druck innerhalb möglichst enger Grenzen aufrecht erhalten werden soll. Bei diesen Ventilen wird herkömmlich ein mit einer Feder belasteter Kolben bei Erreichen eines an einem Einlassport anliegenden bestimmten Druckes entgegen der Richtung der Federkraft angehoben, bis er aus seiner Ruhelage heraus einen zweiten Ventilsitz erreicht, der eine Steuerstellung bedeutet, bei der eine Verbindung zum Auslassport hergestellt und dadurch das Gas durch das Ventil hindurch geleitet wird. Ist der Druck am Einlassport zum Anheben des Ventilkolbens nicht ausreichend, drückt die Feder den Ventilkolben in den gegenüberliegenden ersten Ventilsitz und öffnet damit den Entlüftungs-Ausgang.

Der vorliegenden Erfindung ist nun die Aufgabe zu Grunde gelegt, den Entlüftungsweg oder -ausgang in einem bestimmten Stellungsbereich des Ventilkolbens zu öffnen.

Gelöst wird diese Aufgabe durch ein Dreiwegeventil gemäß dem Hauptanspruch 1. Vorteilhafte Ausführungsformen gehen aus den Unteransprüchen hervor.

Kerngedanke der Erfindung liegt darin, dass das Ventil in drei unterschiedlichen Steuerstellungen ansteuerbar ist, die allesamt mit dem am Einlassport anliegenden Druckmittel erhalten werden können. Insofern sind am Einlassport drei verschiedene Druckbereiche vorzusehen, um besagte drei Steuerstellungen zu realisieren.

Mithilfe des erfindungsgemäßen Ventils ist es damit möglich, beispielsweise einen Kraftfahrzeugreifen auf einen in einer Steuereinrichtung vorbestimmten Druck zu bringen, d.h. diesen zu erhöhen bzw. zu mindern. Zum Befüllen des Reifens ist zu diesem Zweck am Einlassport des Ventils Druckluft mit einem Druck anzulegen, der mindestens dem Druck entspricht, den der Reifen letztendlich erreichen soll. Mittels des so angelegten Druckes wird ein Absperrelement geöffnet, bzw. der Ventilkolben aus seiner Ruhelage in einen zweiten Ventilsitze gebracht, so dass beim Durchschalten des Ventils die Druckluft in den Reifen gelangt und diesen auf das gewünschte Druckniveau bringt. Liegt demgegenüber am Einlassport keine Druckluft an, so sperrt das Ventil allseitig, womit keine Luft aus dem Reifen dringt. Um den Druck in dem Reifen absenken zu können, ist wiederum am Einlassport des Ventils ein vorbestimmter Fluid-Druck anzulegen, der geringer ist als der oben genannte Befülldruck, mit dem also das Absperrelement geschlossen bleibt, bzw. der Ventilkolben eine vorbestimmte Position zwischen seinem ersten und zweiten Ventilsitz erreicht und eine Verbindung vom Auslassport, d.h. dem Reifeninnenraum und dem Entlüftungsweg des Ventils öffnet, die Verbindung zwischen Einlassport und Auslassport aber so geschlossen bleibt.

Da am Auslassport der Druck entsprechend dem Reifeninnendruck anliegt, wird der Ventilkolben tendenziell immer automatisch in denjenigen Ventilsitz gedrängt, gemäß dem sich das Ventil in seiner allgemeinen Sperrstellung befindet. Um nun bei unterschiedlichen Drücken am Auslassport eine Zwischenstellung des Ventilkolbens erreichen zu können, um die Verbindung zwischen Auslassport und Entlüftungsweg - beispielsweise zum Luftablassen eines Kfz-Reifens - dauerhaft öffnen zu können, ist der Ventilkolben vorteilhaft mit einer Feder vorgespannt, die den Ventilkolben in einem bestimmten Stellungsbereich bei unterschiedlichen Drücken am Auslassport halten kann.

Vorrichtungstechnisch weist das erfindungsgemäße Ventil einen Ventilkörper auf, durch den ein Hohlkanal führt, an dem ein Einlassport, ein Auslassport und ein über einen Strömungskanal mit dem Auslassport kommunizierender Entlüftungsweg angeschlossen sind. In dem Hohlkanal ist ein Ventilkolben gehalten, der zwischen zwei Kolbensitzstellungen verfahrbar ist. In seiner ersten, eine Ruhestellung bedeutenden Kolbensitzstellung sperrt das Ventil in allen Richtungen. Diese Ruhestellung wird erreicht, wenn an dem Einlassport kein oder nur ein unterhalb eines vorgegebenen Minimalwertes anliegender Druck vorherrscht. Dieser erste Kolbensitz wird nachfolgend daher auch als Sperrsitz bezeichnet.

Der Ventilkolben weist an seinem zum Einlassport gerichteten Ende einen Ventilteller auf, der mit dem Druckmittel beaufschlagbar ist, womit der Ventilkolben aus seinem Sperrsitz heraus in die zweite Kolbensitzstellung gebracht werden kann. Der Ventilteller dichtet den Einlassport gegenüber dem Auslassport zumindest in seiner Kolbensitz-Ruheposition, d.h. in seiner Sperrstellung ab.

Das Ventil weist ferner ein betätigbares Sperrglied auf, mit dem der Entlüftungsweg geöffnet und gesperrt werden kann. Eine Betätigung des Sperrgliedes erfolgt über den Ventilkolben, beispielsweise über den Ventilteller oder über eine hierfür speziell vorgesehene Betätigungs-Vorrichtung am Ventilkolben.

Das Sperrglied selbst kann so vorgesehen sein, dass ein Teil des Sperrgliedes am Ventilkolben sitzt und mit einem komplementären Bauteil, welches im Hohlkanal des Verfahrwegs des Ventilkolbens angeordnet ist, zusammenwirkt. Das Sperrglied kann auch als separates Bauteil vorgesehen sein, das im Entlüftungsweg angeordnet ist und durch eine Berührung mit dem Ventilkolben oder der besagten Betätigungs-Vorrichtung in einer bestimmten Stellung des Ventilkolbens betätigbar ist. Wird demnach der Ventilkolben aus seinem Sperrsitz gebracht, wird zunächst das Sperrglied betätigt, um den Entlüftungsweg des Ventils zu öffnen. Erst wenn dann der Druck am Einlassport einen höheren Schwellenwert übersteigt, wird die Betätigung des Sperrgliedes aufgehoben, bzw. der Entlüftungsweg wieder verschlossen und zeitgleich beim oder nachfolgend dem Erreichen des zweiten Ventilkolbensitzes die Verbindung zwischen Einlassport und Auslassport geöffnet. Dies wird veranlasst durch ein erfindungsgemäß vorgesehenes Absperrelement, das auf ein Überschreiten des oben genannten Schwellenwertes des am Einlassport anliegenden Druckes reagiert und öffnet.

Die Erfindung wird nachfolgend mit Bezug auf die beigefügten Zeichnungen beschrieben.

In diesen zeigt:
- Fig. 1 eine Schnittansicht des erfindungsgemäßen Dreiwege-Ventils;
- Fig. 2 drei geschnittene Ansichten des erfindungsgemäßen Dreiwege Ventils in seinen drei Steuerstellungen.

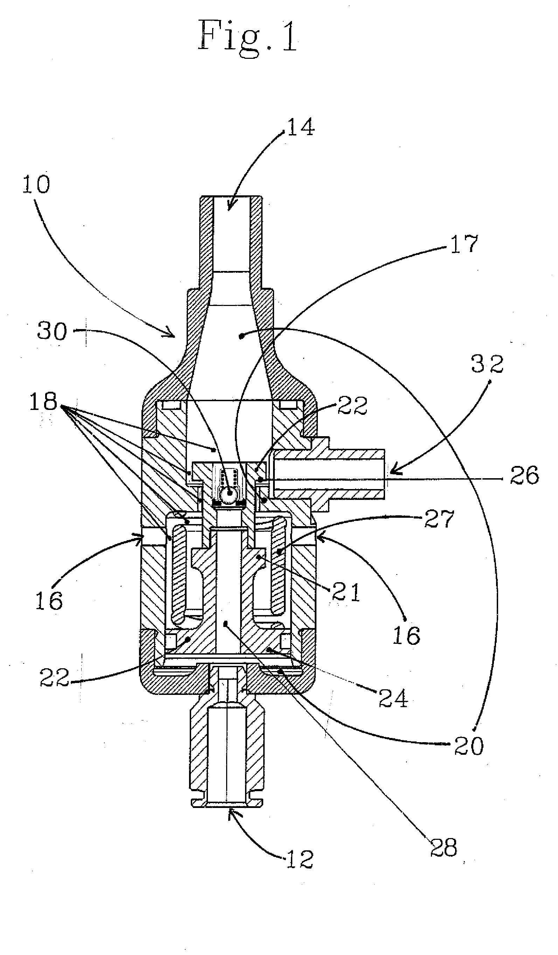

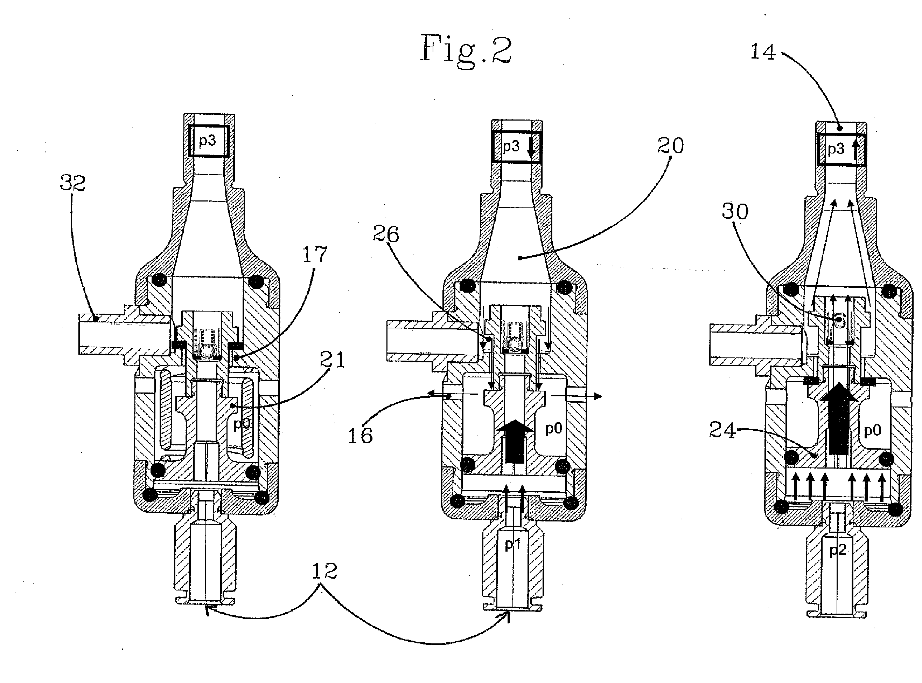

Figur 1 zeigt eine vorteilhafte Ausführungsform des erfindungsgemäßen Ventils in Schnittansicht. Das Ventil weist einen Ventilkörper 10 auf, an dem ein Einlassport 12, ein Auslassport 14 sowie ein Entlüftungsweg 16 angeschlossen sind, die über einen Hohlkanal 20 in Verbindung stehen. In dem Hohlkanal 20 ist ein Ventilkolben 22 verfahrbar gehalten, der drei Steuerstellungen einnehmen kann (zu den einzelnen Steuerstellungen siehe Erläuterungen zu Figur 2). An seinem Ende zum Einlassport 12 hin, weist der Ventilkolben 22 einen Ventilteller 24 auf, der mit dem Druckmittel beaufschlagbar ist, das am Einlassport 12 zugeführt werden kann. Der Ventilteller 24 hat vorteilhafterweise eine Nut, in der ein Dichtring aufgenommen werden kann, um einen gasdichten Abschluss vom Einlassport 12 zum Auslassport 14 zu schaffen. In dem Hohlkanal 20 ist der Ventilkolben 22 durch den Kragen einer Verjüngung 17 des Holkanals 20 unterstützt, welcher Kragen die Bewegung des Ventilkolbens 22 entlang seines fahrbaren Weges führt. An seinem oberen Ende weist der Ventilkolben 22 ein Sperrglied 26 auf, dass in seiner Sperrstellung und damit in der Sperrstellung des Ventilkolbens abdichtend auf dem Verjüngungs-Kragen 17 aufsitzt. Um ein gasdichtes Schließen vorzusehen, kann zwischen dem Sperrglied 22 und dem oberen Ende des Verjüngungs-Kragens 17 eine Fluiddichtung vorgesehen sein. Wird der Ventilkolben 22 nun durch einen am Einlassport 12 anliegenden Druck minimal aus seinem 1. Ventilsitz angehoben, muss das Sperrglied 26 öffnen und eine Verbindung vom Auslassport 14 zum Entlüftungsweg 16 freigegeben, der unterhalb des Kragens 17 angeordnet ist. Damit vom Auslassport 14 Gas am Sperrglied 26 vorbei über die Kragen-Verjüngung 17 zum Entlüftungsweg 16 hin strömen kann, ist entweder in der Kragen-Verjüngung oder an entsprechender Stelle des Ventilkolbens 22 eine oder mehrere Kanalbohrung(en) eines Strömungskanals 18 vorgesehen. Öffnet demnach das Sperrglied 26 durch Anheben des Ventilkolbens 22 werden die Kanalbohrungen geöffnet, und Fluid - beispielsweise Luft - kann vom Auslassport 14 über den Strömungskanal 18 an den Entlüftungsausgang 16 strömen. Wird sodann der Ventilkolben 22 durch Erhöhen des Drucks am Einlassport 12 weiter verfahren, erreicht der Ventilkolben 22 seinen 2. Ventilsitz. Dieser ist definiert durch den Anschlag eines am Ventilkolben 22 befindlichen Ringkragens 21 am unteren Ende der Kragenverjüngung 17. Durch diesen Anschlag, der den 2. Ventilsitz des Ventilkolbens definiert, ist erneut eine Verbindung zwischen dem Auslassport 14 und dem Entlüftungsweg 16 durch Blockierung des Strömungskanals 18 gesperrt. Zum Zwecke eines gasdichten Schließens dieser Verbindung kann eine Dichtung zwischen den beiden komplementären Elementen von einerseits Ringkragen 21 und andererseits der Kragen-Verjüngung 17 vorgesehen sein. Um nun eine dauerhafte Stellung des Ventilkolbens 22 in einem Bereich realisieren zu können, in dem das Sperrglied 26 öffnet und damit der Strömungskanal 18 geöffnet ist, ist zwischen der Kragen-Verjüngung 17 und dem Ventilteller 24 eine Feder 27 vorgesehen. Die Kraft dieser Feder definiert einen vorbestimmten Druckbereich, innerhalb dessen der Ventilkolben 22 zwischen seinen beiden Ventilsitzen über eine gewünschte Zeitdauer gehalten werden kann. Hier ist ebenso der Druck zu berücksichtigen, der an dem Ventilkolben 22 auf der Seite des Auslassports 14 anliegt. Bei einer Verwendung des erfindungsgemäßen Ventils zur Befüllung eines Kraftfahrzeugreifens entspricht dieser letztgenannte Druck am Auslassport 14 dem Reifeninnendruck.

Wird nun am Einlassport 12 ein Druck vorgesehen, mit dem der Ventilkolben 22 aus seinem sperrenden 1. Ventilsitz in seinen 2. Ventilsitz verfahren wurde und ist der Druck nun ausreichend hoch - d.h. er übersteigt einen zweiten Schwellenwert, der das Ende des oben genannten Druckbereiches zum Halten des Ventilkolbens zwischen seinen beiden Ventilsitzstellungen definiert, sodass der Entlüftungsweg 16 geöffnet war - so öffnet ein Absperrelement 30, womit eine Verbindung zwischen dem Einlassport 12 und dem Auslassport 14 geöffnet ist. Diese Verbindung zwischen Einlassport 12 und Auslassport 14 ist durch einen Druckmittelkanal 28 realisiert, der durch den Ventilkolben 22 führt. Das Absperrelement 30 ist damit in dem Druckmittelkanal 28 angeordnet. Das Absperrelement 30 ist im vorliegenden Fall vorteilhaft ein Kugelventil, das mit einer Feder vorgespannt ist. Diese Federvorspannung definiert den Druckbereich, der am Einlassport 12 anliegen muss, um das Ventil vom Einlassport 12 zum Auslassport 14 zu öffnen. Das Absperrelement 30 öffnet dabei erst nachfolgend der Position, in der der Ventilkolben 22 seinen 2. Ventilsitz erreicht, und damit den Strömungskanal geschlossen hat.

Mit der Bezugsziffer 32 ist der Anschluss für ein herkömmliches Reifendruckventil gekennzeichnet. Dies ermöglicht ein tankstellenseitiges Befüllen des Kraftfahrzeugreifens mittels herkömmlicher Druckluftsysteme.

Figur 2 zeigt Schnittansichten des erfindungsgemäßen Ventils in einer jeweiligen Steuerstellung. In der linksseitigen Darstellung liegt am Einlassport 12 kein Überdruck an. Der Ventilkolben 22 sitzt damit in seinem 1. Ventilsitz, der eine Sperrstellung des Ventils bedeutet, d.h. es ist sowohl der Druckmittelkanal 28 als auch der Strömungskanal 18 gesperrt. Mittels der Feder 27 ist diese Stellung des Ventilkolbens 22 gewährleistet, in der das Sperreglied 26 den Strömungskanal 18 gesperrt, und mittels der Federvorspannung des Absperrelements 30 - hier des Kugelventils - ist der Durchlass zwischen Einlassport 12 und Auslassport 14, d.h. der Druckmittelkanal 28 gesperrt. Der Teil des Hohlkanals 20, an dem der Entlüftungsweg 16 direkt angeschlossen ist, d.h. der Raum, in dem sich die Feder 27 befindet, liegt auf einem DruckNiveau p0 entsprechend dem Atmosphärendruck. In diesem Zustand kann ein am Anschluss 32 vorgesehenes Reifendruckventil genutzt werden, um beispielsweise Druckluft über den Auslassport 14 in einen Kfz-Reifen zu pumpen.

In der mittleren Darstellung von Figur 2 ist eine Steuerstellung gezeigt, bei der sich der Ventilkolben 22 zwischen seinem 1. Ventilsitz (siehe linksseitige Darstellung von Fig. 2) und seinem 2. Ventilsitz (siehe rechtsseitige Darstellung von Fig. 2) befindet. Durch das Anlegen eines Druckes p₁ am Einlassport 12 wird der Ventilkolben 22 aus seinem 1. Ventilsitz verfahren. Damit öffnet das Sperrglied 26, womit Fluid vom Auslassport 14 durch den Strömungskanal 18 (siehe Figur 1) über den Entlüftungsweg 16 gelangt. Diese Strömungsrichtung ist natürlich durch den gegenüber dem Atmosphärendruck p₀ höheren Druck p₃ am Auslassport 14 bedingt. Das mit dem Druck p₁ am Einlassport 12 anliegende Druckmedium gelangt ferner in den im Ventilkolben 22 vorgesehenen Druckmittelkanal 28. Dieser ist jedoch mittels Absperrelement 30 geschlossen, so dass kein Fluid vom Einlassport 12 an den Auslassport 14 gelangt. Der Druck p₁ am Einlassport 12 ist so gewählt, dass er den Ventilkolben 22 entgegen der Federkraft der Feder 27 (siehe Figur 1) verschiebt, und sich die Federkraft der Feder 27 mit dem Druck p₁ im Gleichgewicht befindet, so dass der Ventilkolben 22 durch die Druckbeaufschlagung zwischen seinen beiden Ventilsitzen verharrt. Damit kann der Entlüftungsweg für eine gewünschte Zeitdauer geöffnet sein.

Wird nun der Druck am Einlassport 12 erhöht, oder wird mit sofortiger Wirkung am Einlassport ein Druck p₂ angelegt, mit dem das Absperrelement 30 geöffnet werden kann, so wird der Druckmittelkanal 28 geöffnet. Damit besteht eine Fluidverbindung zwischen dem Einlassport 12 und dem Auslassport 14. Diese Steuerstellung ist in der rechtsseitigen Darstellung von Figur 2 gezeigt. Diese Steuerstellung betrifft damit einen Zustand, bei dem das Druckmittel durch das Ventil über den Hohlkanal 20 und insbesondere über den Druckmittelkanal 28 geführt wird. Die Federkraft der Feder 27 (siehe Figur 1) sollte vorteilhaft dabei so bemessen sein, dass sie kleiner ist als der Öffnungsdruck des Absperrelements 30, bzw. der hierfür erforderlichen Kraft, damit der Ventilkolben 22 beim Anlegen eines zum Öffnen des Absperrelements 30 erforderlichen Druckes in seinen 2. Ventilsitz gebracht wird, und so den Strömungskanal 18 zum Entlüftungsweg 16 wieder schließt, bevor das Absperrelement 30 öffnet.

Für eine von zwei alternativen Funktionsweisen des erfindungsgemäßen Ventils ist der Druckbereich, in dem der Ventilkolben aus seinem 1. Ventilsitz heraus verfahren wird und den Strömungskanal zum Öffnen des Verbindungsweges zwischen Auslassport 14 und Entlüftungsweg 16 öffnet, möglichst klein zu wählen. Ferner sollte dieser Druckbereich nahe des Atmosphärendrucks liegen. Dies hat den Vorteil, dass der Bereich des im Reifen letztendlich zu erzielenden Reifendrucks größer wird. Soll ein platter Reifen auf einen Innendruck von 1,5 bar gebracht werden, so muss beim Anlegen eines Druckes von 1,5 bar am Einlassport 12 das Absperrelement 30 des Ventils öffnen. Um bei einem so voreingestellten Absperrelement ferner auch Luft aus dem Reifen ablassen zu können, muss der Ventilkolben dauerhaft in einer Zwischenstellung zwischen seinem 1. Ventilsitz und seinem 2. Ventilsitz gehalten werden können, und zwar mit einem Druck, der in einem Druckbereich unterhalb des minimal in dem Reifen zu erzielenden Druckes liegt. Damit ist es vorteilhaft, die Federkraft der Feder des Ventilkolbens möglichst klein zu wählen, und die Federkraft der Federvorspannung für das Absperrelement geringfügig, beispielsweise mit einem Faktor 1,2 größer zu wählen.

Alternativ kann zum Befüllen des Reifens ein binär zu schaltender Druck am Einlassport angelegt werden, der den im Reifen zu erzielenden Druck übersteigt, wobei aber dann eine Sensorvorrichtung vorliegen muss, die das Erreichen des letztendlich zu erzielenden Reifendruckes wiedergibt, um den Kompressor des Druckmittels dann wieder abzuschalten. Diese Lösung beinhaltet auch, dass der Kompressor einen Druckspeicher speisen kann, der beim Öffnen den Maximaldruck am Einlassport aufbringt.

### Bezugszeichenliste:

- 10: Ventilkörper
- 12: Einlassport
- 14: Auslassport
- 16: Entlüftungsweg
- 17: Verjüngung
- 18: Strömungskanal
- 20: Hohlkanal
- 21: Ringkragen
- 22: Ventilkolben
- 24: Ventilteller
- 26: Sperrglied
- 27: Feder
- 28: Druckmittelkanal
- 30: Absperrelement
- 32: Anschluss für ein Reifendruckventil

## Patentansprüche

1. Druckmittel betätigbares 3/3-Wegeventil mit einem Ventilkörper (10), an dem ein mit Druckmittel beaufschlagbarer Einlassport (12) und ein zum Durchführen des Druckmittels fungierender Auslassport (14) vorgesehen ist, der über einen Strömungskanal (18) mit einem Entlüftungsweg (16) kommuniziert, wobei in dem Ventilkörper ein Hohlkanal (20) gebildet ist, der einen Teil des kommunizierenden Strömungskanals bildet und innerhalb dessen ein zwischen einer Sperrstellung und einer Öffnungsstellung zum Durchlass von Druckmittel verfahrbarer Ventilkolben (22) gehalten ist, der einen Ventilteller (24) aufweist, der mit dem Druckmittel beaufschlagbar ist und der den Hohlkanal (20) zumindest in der Sperrstellung abdichtet, wobei ferner ein Sperrglied (26) vorgesehen ist, das den besagten Strömungskanal (18) zwischen Auslassport und Entlüftungsweg in zumindest der Sperrstellung des Ventilkolbens sperrt, wobei durch den Hohlkanal (20) ferner ein Druckmittelkanal (28) führt, der ein Absperrelement (30) aufweist, das beim Erreichen der aus der Druckmittelbeaufschlagung resultierenden Öffnungsstellung des Ventilkolbens den Druckmittelkanal (28) öffnet.

2. Ventil nach Anspruch 1,
**dadurch gekennzeichnet, dass** der Strömungskanal (18) zwischen Auslassport (14) und Entlüftungsweg (16) auch in der Öffnungsstellung des Ventilkolbens (22) durch das Sperrglied gesperrt ist.

3. Ventil nach Anspruch 2,
**dadurch gekennzeichnet, dass** das Sperrglied (26) den Strömungskanal (18) sperrt.

4. Ventil nach Anspruch 2,
**dadurch gekennzeichnet, dass** der Ventilteller (24) den Strömungskanal (18) sperrt.

5. Ventil nach einem der Ansprüche 1 bis 4,
**dadurch gekennzeichnet, dass** ein Ventilelement vorgesehen ist, das den Ventilkolben mit einer Kraft beaufschlagt, mit der der Ventilteller (24) zum Einlassport bewegt wird.

6. Ventil nach einem der vorangehenden Ansprüche,
**dadurch gekennzeichnet, dass** das Absperrelement (30) des Druckmittelkanals (28) ein Kugelventil ist.

7. Ventil nach einem der vorangehenden Ansprüche,
**dadurch gekennzeichnet, dass** an dem Ventilkörper (10) ein weiterer Anschluss (32) für ein herkömmliches Reifendruckluftventil vorgesehen ist, über den Druckluft zur Auslassport-Seite geführt werden kann.
